# EUROPEAN PATENT SPECIFICATION

(11) **EP 2 186 860 B1**
(45) Date of publication and mention of the grant of the patent: **24.08.2011**
(21) Application number: 08169226.1
(22) Date of filing: 17.11.2008
(51) Int. Cl.: C08L 67/02, C08K 3/08, C08K 3/36, C08K 5/3492, C08L 83/04, G21F 1/10, G21F 1/12

(54) **Resin composition and sheet using resin composition**
Harzzusammensetzung und Platte, die die Harzzusammensetzung einsetzt
Composition de résine et feuille l'utilisant

(43) Date of publication of application: 19.05.2010
(73) Proprietor: Alpha Technical Research Co., Ltd, Kobe-shi, Hyogo 650-0033 (JP); MATE Co., Ltd., Wake-gun Okayama 709-0514 (JP)
(72) Inventor: Furusawa, Tatsuo, Chuo-ku Kobe-shi, Hyogo 650-0033 (JP); Furusawa, Koichi, Chuo-ku Kobe-shi, Hyogo 650-0033 (JP); Ishihara, Noriyuki, Wake-gun, Okayama 709-0514 (JP); Hirano, Yoshihiro, Wake-gun, Okayama 709-0514 (JP); Ariyoshi, Tsuneyasu, Wake-gun, Okayama 709-0514 (JP); Kanadani, Teruhisa, Wake-gun, Okayama 709-0514 (JP); Matsuda, Daisuke, Wake-gun, Okayama 709-0514 (JP)
(74) Representative: Hart-Davis, Jason

(56) References cited:
- WO-A-03/016029
- JP-A- 2008 175 811
- US-A- 6 048 379
- US-A1- 2004 029 998
- US-A1- 2006 284 122
- DATABASE WPI Week 200354 Thomson Scientific, London, GB; AN 2003-572309 XP002519149 -& JP 2003 004892 A (KANEBO GOSEN KK) 8 January 2003 (2003-01-08)

## Description

### BACKGROUND OF THE INVENTION

### 1. Field of the Invention

The present invention relates to a resin composition to be used as a radiation shielding material; and also relates to a sheet using the resin composition.

### 2. Description of Related Art

In facilities in which radiation must be dealt with, such as nuclear power plants and medical institutions, radiation shielding materials are used for protection barriers and protective clothing for preventing damage caused by radiation. For conventional radiation shielding materials, a metallic lead plate or the like is generally used. However, lead is a material harmful to humans. In addition, a dissolved lead ingredient causes the destruction of the natural environment, which influences the global environment. Therefore, an alternative material has been requested.

As measures for the above problem, resin compositions have been proposed in which a lead-free material high in radiation shielding performance, such as tungsten, bismuth, or a compound of tungsten or bismuth, is compounded in place of lead. For example, Patent Document 1 discloses a sheet in which tungsten particles are dispersed in an elastomer. On the other hand, Patent Document 2 discloses a radiation shielding vessel using tungsten particles and an elastomer resin. In them, there is flexibility and easiness to process because a flexible elastomer resin is used.

Patent Document 1: Japanese Patent Unexamined Publication No. 2008-175811
Patent Document 2: Japanese Patent Unexamined Publication No. 2003-004892

In the sheet of Patent Document 1 and the vessel of Patent Document 2, however, tungsten particles are contained in a specific gravity of about 8.0 in order to realize its shielding performance equal to metallic lead. Therefore, the sheet of Patent Document 1 is fragile in comparison with a sheet made of only a resin. As a result, when bending at 90 degrees is repeated, a surface of the sheet of Patent Document 1 may be easily cracked. The vessel of Patent Document 2 may be damaged due to cracking.

On the other hand, such a resin composition is high in combustibleness because it contains a high-molecular resin. Thus, the resin composition is inferior in flame retardance to a metallic lead sheet. For this reason, resin compositions have been proposed to which flame retardants are added. In many cases, however, halogen flame retardants are used. Halogen flame retardants are higher in flame retardance than non-halogen flame retardants. Thus, even a small amount of halogen flame retardant added to a resin composition can achieve sufficient flame retardance. Contrastingly, in the case of non-halogen flame retardants, sufficient flame retardance can not be obtained unless a very large amount is added in comparison with the case of halogen flame retardants. However, when a large amount of retardant is added to a resin composition, the obtained resin composition decreases in its mechanical properties, which is not practical. For this reason, only resin compositions containing halogen flame retardants have been put in practical use.

However, when a halogen compound is burned, dioxin and so on are generated, which exert a harmful influence to the environment. In recent years, therefore, various industrial materials are required to be halogen-free from the needs for the environmental preservation. On the other hand, a material has been requested that can achieve superior flame retardance without using any halogen flame retardant. However, it is not easy to achieve sufficient flame retardance with keeping practical mechanical strength by using a flame retardant not containing any halogen element.

### SUMMARY OF THE INVENTION

An object of the present invention is to provide a resin composition that achieves high flame retardance and bending strength with using no halogen flame retardant; and to provide a sheet using the resin composition.

According to an aspect of the present invention, a resin composition comprises a tungsten powder, a polyester elastomer, silica, a polysiloxane compound, melamine cyanurate, and substantially no halogen element. The total content of silica and the polysiloxane compound is not less than 22% in weight relative to 100% in weight of the polyester elastomer. The content of melamine cyanurate is not less than 17% in weight relative to 100% in weight of the polyester elastomer. The total content of silica, the polysiloxane compound, and melamine cyanurate is 45% to 53% in weight relative to 100% in weight of the polyester elastomer. According to another aspect of the present invention, a resin composition comprises a tungsten powder, a polyester elastomer, silica, a polysiloxane compound, melamine cyanurate, and substantially no halogen element. The oxygen index of the resin composition is not less than 26. The number of times of bending a test piece at 90 degrees circumferentially of a 10 mm-diameter column is not less than 1000 in a repetitive bending test using the test piece made of the resin composition having its length of 50 mm, its width of 100 mm, and its thickness of 2.25 mm.

According to the invention, because the resin composition contains the above compounds at the above contents, the resin composition superior in flame retardance and bending strength can be provided with using no halogen flame retardant. Specifically, the resin composition has its flame retardance of an oxygen index of 26 or more measured by a burning test according to JISK7201. In addition, the resin composition has its bending strength that the number of times of bending a test piece at 90 degrees circumferentially of a 10 mm-diameter column is not less than 1000 in a repetitive bending test using the test piece made of the resin composition having its length of 50 mm, its width of 100 mm, and its thickness of 2.25 mm. The term "substantially no halogen element" means that no halogen element is purposefully added in a material used. The amount of eluted halogen ingredients is preferably less than 30ppm when 10g of the resin composition is dipped, for 10 minutes, in 100g of hot water at 100 degrees Celsius. It is further preferable that the eluted' amount is 10ppm.

The resin composition preferably further comprises 5% to 20% in weight of a plasticizer relative to 100% in weight of the polyester elastomer. Thereby, the bending strength can be improved and the plasticizer can be prevented from bleeding out.

A resin sheet of the present invention preferably comprises a sheet made of the resin composition. By thus forming the resin composition into a sheet, the sheet can be efficiently used in a facility in which radiation must be dealt with. The resin sheet is preferably formed by putting in layers two sheets made of the resin composition. By thus putting two sheets in layers, the bending strength, the flame retardance, and also the X-ray and the γ-ray shielding performance are improved in comparison with a single sheet having the thickness equal to the total thickness of two sheets. For example, by putting two 1 mm-thick sheets in layers, a layered sheet superior in bending strength and flame retardance can be provided though the layered sheet has its thickness that is equal to or substantially close to the thickness of a conventionally used metallic lead sheet. Such a layered sheet has flame retardance and X-ray and γ-ray shielding performance as those of a single about 2 mm-thick resin sheet, and is superior to a single about 2 mm-thick resin sheet in bending strength.

### BRIEF DESCRIPTION OF THE DRAWINGS

FIG. 1 is a schematic view of a part of a sheet according to a first embodiment of the present invention; and
FIG. 2 is a schematic view of a part of a sheet according to a second embodiment of the present invention.

### DESCRIPTION OF THE PREFERRED EMBODIMENTS

Hereinafter, preferred embodiments of the present invention will be described in detail with reference to the accompanying drawings.

### [First Embodiment]

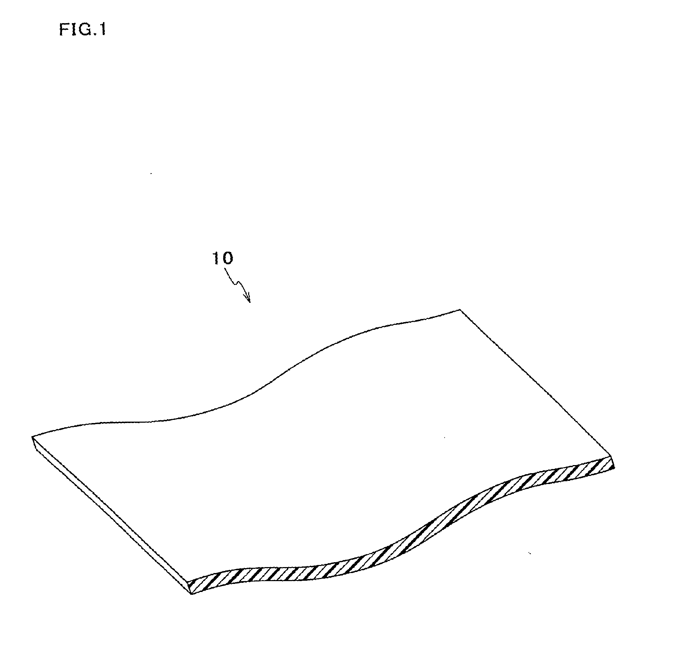

Here will be described an embodiment of a sheet made of a resin composition according to the present invention to be used in a nuclear power plant. FIG. 1 is an view of a part of the sheet according to the embodiment of the present invention.

A resin sheet 10 is formed by rolling a resin composition. The resin composition contains a tungsten powder, a polyester elastomer, silica, a polysiloxane compound, melamine cyanurate, condensed phosphate ester, and other additives. Any additive containing a halogen element, for example, a halogen retardant, is not added to the resin composition. Thus, the resin composition contains substantially no halogen element. The amount of eluted halogen ingredients is less than 30ppm when 10g of the resin composition is dipped, for 10 minutes, in 100g of hot water at 100 degrees Celsius. Although in this embodiment the amount of eluted halogen ingredients is less than 30ppm, it is further preferable that the eluted amount is 10ppm. The total content of silica and the polysiloxane compound is 22% in weight or more relative to 100% in weight of the polyester elastomer. The content of melamine cyanurate is 17% in weight or more relative to 100% in weight of the polyester elastomer. The total content of silica, the polysiloxane compound, and melamine cyanurate is 45% to 53% in weight relative to 100% in weight of the polyester elastomer. The content of condensed phosphate ester is 5% to 20% in weight relative to 100% in weight of the polyester elastomer. The tungsten powder is compounded so that the resin composition has its specific gravity of not less than about 8.0, that is, 7.5 to 8.5.

The above resin composition has its oxygen index of 26 or more measured by a method according to the burning test JIS K 7201. In a repetitive bending test using a sheet as a test piece made of the above resin composition having its length of 50 mm, its width of 100 mm, and its thickness of 2.25 mm, the number of times of bending at 90 degrees circumferentially of a 10 mm-diameter column is not less than 1000.

### (Tungsten Powder)

The average particle diameter of the tungsten powder is preferably 1 to 100 micrometers. When the average particle diameter is less than 1 micrometer, the specific surface area is too large. This makes it difficult to process when the powder is compounded in the resin. As a result, the filling rate can not be raised to a desired value. On the other hand, when the average particle diameter is more than 100 micrometers, tungsten particles become easy to separate from the surface of the resin sheet 10. This may cause a problem of lowering the strength. Two or more tungsten powders different in grain size distribution can be used by mixing. For example, a tungsten powder having its average particle diameter of 1 to 10 micrometers and a tungsten powder having its average particle diameter of 10 to 30 micrometers can be mixed at a ratio of 1:9 to 9:1. The ratio is more preferably 3:7 to 7:3.

It is preferable that the tungsten powder contains no basic element such as sodium and potassium. In the case of a tungsten powder containing a large amount of alkali metal such as sodium or potassium, when a resin composition using the tungsten powder is used under a high-humidity-level condition, the tungsten powder reacts with moisture to produce tungstate. Further, hydrate of tungstate appears on a surface of the sheet. This defaces the product. Therefore, the content of basic element such as sodium and potassium is preferably held down to 20 ppm or less, more preferably, held down to 10 ppm or less.

For the use of the tungsten powder, the tungsten powder is preferably surface-treated with various surface preparation agents such as a coupling agent and a surfactant agent in order to improve the compatibility with the polyester elastomer. The usable surface preparation agents include silane coupling agents, titanate coupling agents, and aluminate coupling agents; in addition, phosphorous surface preparation agents, metallic soaps, and various alkoxies, though they are not limitative. On the other hand, in order to suppress the combustibleness of the tungsten powder, an oxygen blocking layer made of an inorganic compound such as an inorganic phosphate compound may be provided on each surface of the tungsten powder. It is also effective to forcibly oxidize or azotize only the vicinity of each pole surface of the tungsten powder to form metastable layers of tungsten oxide or nitride stable to oxidation and thereby improve the stability to oxidation of the tungsten powder. Such oxygen blocking layers may be combined with the compatibility improvement surface treatment.

The filling rate of the tungsten powder is not particularly limited. It is important to properly select in accordance with application a filling rate good in balance between the radiation shielding performance and the strength when used as a composite material. When the filling rate is low, the strength of the resin sheet 10 is improved but the radiation shielding performance tends to lower. On the other hand, when the filling rate is high, the radiation shielding performance is improved but the strength tends to lower and the sheet becomes easy to be broken or cracked. Thus, an increase in the filling rate makes it possible to realize the same shielding performance by a thinner sheet. For example, a filling rate of the tungsten powder is exemplified at which an about 2 mm-thick resin composition sheet shows the same radiation shielding performance as a 2 mm-thick metallic lead sheet. Specifically, a composition rate of 90% to 92% in weight is exemplified that is a filling rate at which the specific gravity of the resin composition is 7.5 to 8.5. However, the filling rate should be properly selected in accordance with application, and it is not limited to the above range.

### (Polyester Elastomer)

In this embodiment, a polyester elastomer is used in the resin. Although the polyester elastomer is not particularly limited, a butanediol terephthalate/polytetramethylene glycol copolymer is used for the polyester elastomer in this embodiment. In general, a polyester elastomer is made of a copolymer of a hard segment and a soft segment. Such hard segments include ethylenediol terephthalate and butylenediol terephthalate. Such soft segments include polyols and polyethers. For example, a copolymer of butanediol terephthalate and polytetramethylene glycol is exemplified. The polyester elastomer is used as a binder for compounding tungsten with flame retardants of melamine cyanurate, silica (silicon dioxide), and a polysiloxane compound. Thus, a lower melt viscosity of the resin itself is preferable because processing becomes easy even when the filling rates of tungsten and so on are increased. In addition, in a bending test of the processed resin sheet 10, when the hardness of the sheet is high, a surface of the resin sheet 10 is cracked by bending. Therefore, a lower hardness of the polyester elastomer to be used is preferable because a more flexible resin sheet 10 can be manufactured. For example, the hardness of Polyester Elastomer used in the resin composition is preferably 98 or less according to the JIS hardness A. However, in the case of a resin having a too low hardness, its molecular weight may be extremely low. Such a resin is apt to have an extremely low tension strength, which is undesirable. Therefore, the hardness of Polyester Elastomer used in the resin composition is preferably 10 or more according to the JIS hardness A. In consideration of the above, the hardness of Polyester Elastomer used in the resin composition is preferably 50 to 95 according to the JIS hardness A, more preferably, 70 to 90 according to the JIS hardness A.

### (Flame Retardant and Auxiliary Flame Retardant)

In this embodiment, melamine cyanurate, silica, and a polysiloxane compound are combined as additives for giving flame retardance to the resin. Melamine cyanurate mainly has a flame retardance effect as a flame retardant. Silica and the polysiloxane compound work as auxiliary flame retardants. Thus, the combination of the addition amount of melamine cyanurate and the addition amount of silica and the polysiloxane compound must be carefully decided. For example, in the case of using a compound in which melamine cyanurate and a mixture of silica and the polysiloxane compound are mixed at 1:1, when the total addition amount of the flame retardant and the auxiliary flame retardants is 45% or more in weight relative to 100% in weight of the resin (polyester elastomer), the oxygen index (JISK7201) is 26 or more when a 2.25 mm-thick resin composition sheet is formed. This is desirable. When the total addition amount of the flame retardant and the auxiliary flame retardants exceeds 53% in weight, the number of times of bending in a bending test using a 2.25 mm-thick sheet is less than 1000. This is undesirable because of lack in practicality in the case of an about 2 mm-thick sheet. Therefore, the total of the flame retardant, that is, melamine cyanurate, and the auxiliary flame retardants, that is, silica and the polysiloxane compound, is preferably 45% to 53% in weight relative to 100% in weight of the resin (polyester elastomer). However, by adding a plasticizer or a softener or selecting a resin, there is possibility of exerting practicality even in a higher range of the total addition amount of the flame retardant and the auxiliary flame retardants. Each of the flame retardant and the auxiliary flame retardants may be variously surface-treated before being added in order to improve the compatibility with the resin. The above-described bending test is a test of measuring the number of times of bending when a test piece made of a resin composition having its length of 50 mm, its width of 100 mm, and its thickness of 2.25 mm is bent at 90 degrees circumferentially of a 10 mm-diameter column.

As for silica (silicon dioxide), there is no particular limitation. Usable silica may be manufactured by either a wet method or a dry method. A smaller grain size of silica is preferable because of good dispersibility. However, when the grain size of silica is extremely small, the resin composition sheet in which silica is compounded becomes fragile, which is undesirable. Therefore, for example, silica having its average particle diameter of 0.1 to 10 micrometers is preferably used. Silica surface may be treated with various surface preparation agents in order to improve the compatibility with the polyester elastomer and the siloxane compound.

As for the siloxane compound, a polysiloxane compound having a plurality of siloxane groups is preferably used. It may be either liquid or solid at the normal temperature. In consideration of handling, however, solid is preferable.

It is thought that silica (silicon dioxide) and the polysiloxane compound work as auxiliary flame retardants. They have effect of auxiliary flame retardants by adding a certain amount or more. In the less amount, however, they do not have effect of auxiliary flame retardants. Even when silica or the polysiloxane compound is used solely, it has effect of flame retardant to the resin. In this embodiment, however, both are compounded. Silica and the polysiloxane compound may be separately added in a process of being compounded in the resin composition. However, from the viewpoint of good handling, it is preferable to add a mixture in which silica and the polysiloxane compound have been mixed in advance. The mixing ratio is, for example, 1:9 to 9:1. A mixing ratio of 3:7 to 7:3 is more preferable form the viewpoint of the effect of flame retardance. By adding silica and polysiloxane as auxiliary flame retardants to combine with melamine cyanurate, an effect is obtained of improving the flame retardance of melamine cyanurate. This is effective to suppress the addition amount of melamine cyanurate necessary for achieving a predetermined flame retardance. This is also effective to improve the mechanical strength of the finally obtained resin composition. For example, by combining melamine cyanurate as a flame retardant, in the case that total addition amount of the flame retardant and the auxiliary flame retardants is 45% to 53% in weight, when the total addition amount of silica and the siloxane compound is 22% or more in weight relative to 100% in weight of the resin, the oxygen index is 26 or more when a 2.25 mm-thick resin compound material is formed. This is desirable. It is preferable that silica and the siloxane compound to be used contain substantially no halogen element.

As for melamine cyanurate, there is no particular limitation. Melamine cyanurate of this embodiment is a compound of triazine trione and triazine triamine. The addition amount should be properly selected in accordance with balance between the flame retardance and mechanical strength of the obtained resin composition. By combining silica and the polysiloxane compound as auxiliary flame retardants, in the case that the total addition amount of the flame retardant and the auxiliary flame retardants is 45% to 53% in weight relative to 100% in weight of the resin, the addition amount of melamine cyanurate is preferably 17% or more in weight relative to 100% in weight of the resin. When the addition amount of melamine cyanurate is increased, the flame retardance is improved but the resin composition tends to extremely lower in its mechanical strength. On the other hand, when the addition amount is decreased to less than 17% in weight, the mechanical strength tends to be improved though the flame retardance is lowered.

### (Plasticizer)

In this embodiment, condensed phosphate ester is used as a plasticizer. The plasticizer is not particularly limited as far as it can plasticize the polyester elastomer. For example, there is usable various esters such as condensed phosphate ester, phthalate ester, maleate, and trimellitate; in addition, polyester plasticizers, stearic acid plasticizers, and epoxy plasticizers. In particular, inorganic acid esters such as condensed phosphate ester are preferably used from the viewpoint of flame retardance. On the other hand, a highly flame-retardant plasticizer constituted by a hydrocarbon compound decreases the oxygen index of the added resin composition. Thus, it is important that such a plasticizer is used at an addition amount within a range capable of achieving a predetermined flame retardance. In the case of using condensed phosphate ester, it is preferably used within a range of 5% to 20% in weight relative to 100% in weight of the polyester elastomer. When the addition amount of the plasticizer is too small as less than 5% in weight, it is undesirable because the plasticization effect can not be obtained. On the other hand, when the addition amount is too large as more than 20% in weight, it is undesirable because the plasticizer ingredient bleeds out from a surface of the resin composition. It is preferable that the plasticizer to be used contains substantially no halogen element.

### (Other Additives)

Various additives may be further added in accordance with application. For example, such additives include an antioxidant, an ultraviolet stabilizer, and a lubricant. Such lubricants include metal salts of fatty acid such as zinc stearate and calcium stearate; in addition, fatty acid ester, fatty acid amide, and fatty acid alcohol. They may be used solely or by combining two or more. It is preferable that various additives to be used contain substantially no halogen element.

The thickness, width, and length of the resin sheet 10 may be decided in accordance with application. The thickness of the resin sheet 10 of this embodiment is 2.25 mm, which is equal to or substantially close to a metallic lead sheet conventionally used. That the resin sheet 10 has its thickness which is less than 2.0 mm is not preferable in terms of practical application, for the reason that the resin sheet 10 of such a thickness will result in lower X-ray and γ-ray shielding performance than those of the metallic lead sheet. To increase the tolerable number of times of bending in a bending test and to improve the oxygen index, the thickness of the resin sheet 10 is preferably at least 2.0 mm or more than 2.0 mm. However, an excessively thick resin sheet 10 is not preferable in terms of quality and cost performance, for the reason that such an excessively thick resin sheet 10 causes heavier weight, difficulties in handling, and higher row material costs. The thickness of the resin sheet 10 therefore must be determined taking into account these different view points. Thus, although an exemplary thickness of the resin sheet 10 fall within a range of 2.0 to 3.0 mm, the thickness preferably falls within a range of 2.0 to 2.5 mm in terms of cost performance.

Next, a manufacturing method of the resin sheet 10 and the resin composition used in the resin sheet 10 of this embodiment will be described. The manufacturing method of the resin composition is not particularly limited. A tungsten powder, a polyester elastomer, and various additives may be compounded by a known method. In this embodiment, first, 2% in weight of a silane coupling agent is added to a tungsten powder. After sufficiently agitated and mixed, they are heated at 100 degrees Celsius for 10 minutes to bring about a coupling reaction, and thereby the tungsten powder is surface-treated. The surface-treated tungsten powder, a polyester elastomer, silica, a polysiloxane compound, melamine cyanurate, condensed phosphate ester, and other additives are weighed. They are agitated and mixed for 3 minutes in a versatile mixer. In this embodiment, for a mixture of silica and the siloxane compound, a silicone powder (available by Dow Corning Toray Co. Ltd, trade name: DC 4-7081) is used. For melamine cyanurate, a non-halogen flame retardant (available by Ciba Speciality Chemicals Inc., trade name: MELAPUR MC25) is used. The mixing amount of additives can be decided so that the plasticizer has a predetermined percentage in weight relative to the resin. The mixing ratio between the resin and the tungsten powder is preferably decided so that the finally obtained resin composition has its calculated specific gravity of about 8.0 (7.5 to 8.5). The obtained mixture is mixed under pressure for 10 minutes in a pressurizing kneader heated to 200 degrees to obtain a lump of a resin composition.

The obtained resin composition is rolled with a calender roll whose roll temperature has been set to 90 degrees to form a sheet having its width of 200 mm and its thickness of 2.25 mm.

A resin sheet 10 of this embodiment uses a resin composition containing a tungsten powder, a polyester elastomer, silica, a polysiloxane compound, and melamine cyanurate; and contains substantially no halogen element. Relative to 100% in weight of the polyester elastomer, the total of silica and the polysiloxane compound is 22% or more in weight; melamine cyanurate is 17% or more in weight; and the total of silica, the polysiloxane compound, and melamine cyanurate is 45% to 53% in weight. Thus, without using any halogen flame retardant, the resin sheet 10 superior in flame retardance and bending strength can be provided.

The resin composition used in the resin sheet 10 of this embodiment contains 5% to 20% in weight of condensed phosphate ester as a plasticizer relative to 100% in weight of the polyester elastomer. Thus, the bending strength can be improved, and the plasticizer can be prevented from bleeding out.

By forming the resin composition of this embodiment into the resin sheet 10, it can be efficiently used as a member to be used in a facility in which radiation must be dealt with, particularly in this embodiment, a nuclear plant. Because the sheet has its thickness of 2.25 mm that is equal to or substantially close to thickness as a conventionally used metallic lead sheet, the sheet of this embodiment can be used like the conventional lead sheet in a facility in which radiation must be dealt with, particularly in this embodiment, a nuclear plant. In addition, the resin sheet can be provided that is superior in bending strength, flame retardance, and the performance of shielding X-rays and γ-rays.

### [Second Embodiment]

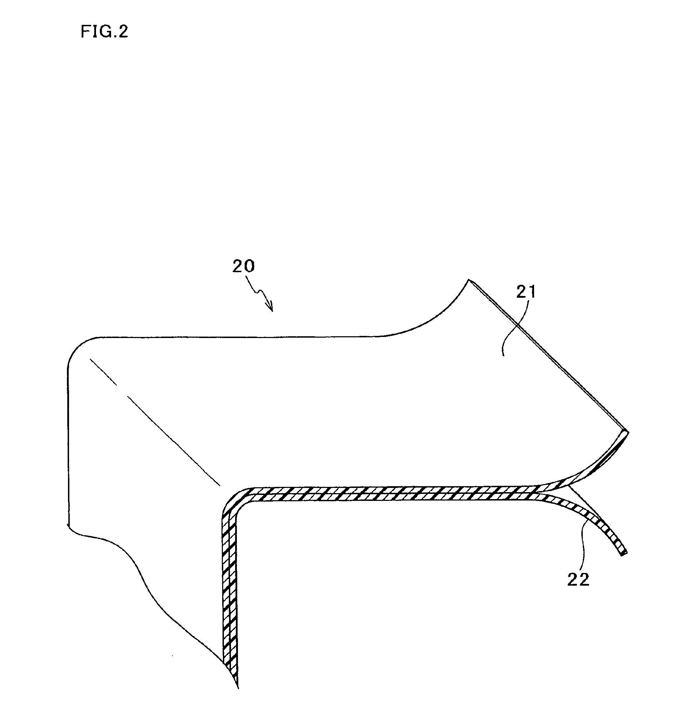

Here will be described a second embodiment of a sheet made of a resin composition according to the present invention to be used in a nuclear power plant. FIG. 2 is an schematic view of a part of the sheet according to the second embodiment of the present invention. Each of sheets 21 and 22 constituting a resin sheet 20 has the same composition as the resin sheet 10 according to the first embodiment, and therefore, the description thereof may be omitted.

The resin sheet 20 differs from the resin sheet 10 of the first embodiment on the point that the resin sheet 20 is a layered sheet in which a sheet 21 and a sheet 22 are put in layers. A not-shown adhesive layer is interposed between the sheets 21 and 22. The thickness, width, and length of each of the sheets 21 and 22 can be properly decided in accordance with application. In this embodiment, each of the sheets 21 and 22 has its thickness of about 1 mm so that the sheet 20 has its thickness, which is equal to or substantially close to thickness of that of a conventionally used metallic lead sheet. For example, a sheet which has its thickness of 1.13 mm can be used as the sheets 21 and 22. However, the thickness of the sheets 21 and 22 is never limited to the thickness of 1.13 mm.

The structure of the resin sheet 20 of this embodiment will be described in detail. An about 1 mm-thick sheet 21 and a 1 mm-thick sheet 22 are put in layers. A surface of the sheet 21 is bonded to a surface of the sheet 22. The bonding method is not particularly limited. A known bonding method can be used. For example, such methods include a thermal fusion bonding method, a method of adhering with an adhesive, a method of adhering with a double-stick tape, and a two-layer extrusion method. In the case of using a separate material such as an adhesive or a double-stick tape for bonding the sheets 21 and 22, it is preferable that the material to be used contains no halogen element. It is more preferable to use a material containing no halogen element and having high flame retardance. In this embodiment, the sheets 21 and 22 are bonded to each other with a double-stick tape containing no halogen element. From the viewpoint of reliability and mechanical strength, the sheets are preferably bonded over the whole surface area. However, if there is no disadvantage in practical use, the sheets 21 and 22 may be partially fixed to each other. For the fixing method, pinning can be used other than the above-described bonding methods. The resin sheet 20 is constituted by the about 1 mm-thick sheets 21 and 22 put in layers and bonded to each other. Therefore, the number of times of bending becomes double or more in comparison with a single 2 mm-thick sheet having its thickness equal to the thickness of the resin sheet 20. Thus, the resin sheet 20 is superior in bending strength.

Next, a manufacturing method of the resin sheet 20 will be described. A resin composition obtained in the same manner as the resin composition of the first embodiment is rolled with a calender roll whose roll temperature has been set to 90 degrees Celsius to form a sheet having its width of 200 mm and its thickness of about 1 mm. The sheet is cut into a predetermined length. Two sheets 21 and 22 obtained by cutting are bonded to each other with a flame-retardant double-stick tape containing no halogen element to form a layered sheet 20.

The resin sheet 20 of this embodiment has the same effect as the resin sheet 10 of the first embodiment. In addition, because two sheets 21 and 22 are put in layers, the resin sheet 20 has flame retardance and X-ray and γ-ray shielding performance as those of a single resin sheet having its thickness equal to the thickness of the resin sheet 20 , and is superior to a single resin sheet having its thickness equal to the thickness of the resin sheet 20 in bending strength.
Further, although the resin sheet 20 has its thickness that is equal to or substantially close to the thickness of a conventionally used about 2 mm-thick metallic lead sheet, the bending strength and the flame retardance are improved.

### [Example]

Next, the present invention will be described in more detail by examples. However, the present invention is never limited to the below examples.

### (Comparison of Flame Retardant)

2% in weight of a silane coupling agent was added to 100% in weight of a tungsten powder. After sufficiently agitated and mixed, they were heated at 100 degrees Celsius for 10 minutes to bring about a coupling reaction, and thereby the tungsten powder was surface-treated. The surface-treated tungsten powder, a polyester elastomer (resin), and each flame retardant shown in Table 1 weighed into 50% in weight relative to the polyester elastomer (resin) were weighed so that the obtained resin composition has its specific gravity of 8.0. They were agitated and mixed for 3 minutes in a versatile mixer to obtain a mixture. The obtained mixture was kneaded for 10 minutes in a pressurizing kneader heated to 200 degrees Celsius to obtain a lump of a resin composition. The obtained resin composition was rolled with two calender rolls heated to 90 degrees Celsius to form a 2.25 mm-thick resin sheet. As described above, each flame retardant shown in Table 1 was compounded at 50% in weight relative to 100% in weight of the polyester elastomer (resin). For a mixture of silica and a siloxane compound shown in Table 1, a silicone powder (available by Dow Corning Toray Co. Ltd, trade name: DC 4-7081) was used. For melamine cyanurate, a non-halogen flame retardant (available by Ciba Speciality Chemicals Inc., trade name: MELAPUR MC25) was used.

### (Bending Test)

From the above sheet, a test piece having its width of 50 mm, its length of 100 mm, and its thickness of 2.25 mm was prepared to be subjected to a bending test. In an apparatus used, a bendable movable plate is connected to a fixed plate. The movable plate can repeatedly be bent by the action of a motor. A hinge is provided at the bending portion so that a portion of the movable plate distant by 15 mm from a sheet fixing portion can be bent at 90 degrees. The movable plate is provided with a sheet fixing rubber band so that a free end of a sheet as a test piece is brought into close contact with the movable plate during test. The rotational axis of the hinge is a 10 mm-diameter column. In a bending test, in order to bend a sheet as a test piece near its center, one end of the sheet as a test piece was fixed to the fixed plate so that a position of the sheet distant by about 15 mm from the center of the sheet was fixed to the fixed plate. The other end of the sheet was fixed to the movable plate with the sheet fixing rubber band provided on the movable plate. The sheet was repeatedly bent at 90 degrees around the rotational axis. Each 50 times of bending, generation of fine cracks on a surface of the sheet as a test piece was visually checked. The number of times of bending was defined by checked times at which no fine cracks were generated.

### (Oxygen Index)

From the above-described sheet, a test piece having its width of 10 mm, its length of 100 mm, and its thickness of 2.25 mm was prepared to be subjected to measurement of the oxygen index. The measuring method of the oxygen index was according to JISK7201. A burning test was performed at intervals of 0.5% of the oxygen index to define the oxygen index by the maximum oxygen concentration at which self-extinguishing occurred.

The following Table 1 shows results of the above.

**[Table 1]**

| Flame retardant | Oxygen index | The number of times of bending |
|---|---|---|
| Magnesium hydrate | 25.0 | 20 |
| Stabilized red phosphorus | 29.0 | 7 |
| Mixture of silica and siloxane compound | 26.0 | 800 |
| Melamine cyanurate | 28.0 | 200 |
| Antimony oxide | 23.5 | 150 |

From Table 1, it is found that resin composition sheets using a mixture of silica and a polysiloxane compound and melamine cyanurate as flame retardants were less in bending strength and obtained good oxygen indexes. However, it was found that resin composition sheets solely using a mixture of silica and a polysiloxane compound or melamine cyanurate as a flame retardant were insufficient in bending strength.

### (Examples 1 to 12 and Comparative Examples 1 to 16)

Next, tungsten surface-treated in the same manner as in (Comparison of Flame Retardant), a polyester elastomer, and a mixture of silica and a polysiloxane compound, and melamine cyanurate at ratios shown in Tables 2 to 5 were weighed and mixed so that the obtained resin composition had its specific gravity of 8.0. In the same manner as in (Comparison of Flame Retardant), a resin composition having its specific gravity of 8.0 was prepared. From the resin composition, a resin sheet as a test piece was formed. Bending tests and measurements of the oxygen index of the resin composition were preformed in the same manner as in (Comparison of Flame Retardant). The mixture of silica and a polysiloxane compound and melamine cyanurate are compounded at the addition amounts shown in Tables 2 to 5. The addition amounts shown in Tables 2 to 5 are compound percentages relative to 100% in weight of the polyester elastomer. The following Tables 2 to 5 show the results of the tests. For convenience of explanation, some Examples and Comparative Examples are repeated.

**[Table 2]**

| | Melamine cyanurate (% in weight) | Total of silica and polysiloxane compound (% in weight) | Oxygen index | The number of times of bending | Total of melamine cyanurate, silica, and polysiloxane compound (% in weight) |
|---|---|---|---|---|---|
| Comparative example 1 | 15 | 25 | 25.0 | 1350 | 40 |
| Comparative example 2 | 17 | 25 | 25.0 | 1400 | 42 |
| Example 1 | 20 | 25 | 26.0 | 1350 | 45 |
| Example 2 | 23 | 25 | 26.5 | 1200 | 48 |
| Example 3 | 26 | 25 | 28.0 | 1050 | 51 |
| Comparative example 3 | 29 | 25 | 29.0 | 850 | 54 |

**[Table 3]**

| | Melamine cyanurate (% in weight) | Total of silica and polysiloxane compound (% in weight) | Oxygen index | The number of times of bending | Total of melamine cyanurate, silica, and polysiloxane compound (% in weight) |
|---|---|---|---|---|---|
| Comparative example 4 | 9 | 28 | 24.0 | 1800 | 37 |
| Comparative example 5 | 12 | 28 | 25.5 | 1500 | 40 |
| Comparative example 6 | 15 | 28 | 25.5 | 1350 | 43 |
| Example 4 | 17 | 28 | 26.5 | 1300 | 45 |
| Example 5 | 21 | 28 | 28.5 | 1150 | 49 |
| Example 6 | 24 | 28 | 28.0 | 1100 | 52 |
| Comparative example 7 | 28 | 28 | 26.5 | 700 | 56 |

[

**Table 4]**

| | Melamine cyanurate (% in weight) | Total of silica and polysiloxane compound (% in weight) | Oxygen index | The number of times of bending | Total of melamine cyanurate, silica, and polysiloxane compound (% in weight) |
|---|---|---|---|---|---|
| Example 7 | 20 | 33 | 27.5 | 1050 | 53 |
| Example 8 | 20 | 31 | 28.0 | 1100 | 51 |
| Example 9 | 20 | 29 | 28.0 | 1350 | 49 |
| Example 10 | 20 | 27 | 27.0 | 1300 | 47 |
| Example 1 | 20 | 25 | 26.0 | 1350 | 45 |
| Comparative example 8 | 20 | 23 | 25.0 | 1200 | 43 |
| Comparative Example 9 | 20 | 21 | 25.0 | 1350 | 41 |

**[Table 5]**

| | Melamine cyanurate (% in weight) | Total of silica and polysiloxane compound (% in weight) | Oxygen index | The number of times of bending | Total of melamine cyanurate, silica, and polysiloxane compound (% in weight) |
|---|---|---|---|---|---|
| Comparative example 10 | 15 | 32 | 25.5 | 1250 | 47 |
| Comparative example 11 | 15 | 40 | 26.0 | 550 | 55 |
| Example 11 | 18 | 32 | 26.0 | 1100 | 50 |
| Comparative example 12 | 22 | 22 | 25.0 | 1300 | 44 |
| Comparative example 13 | 25 | 30 | 27.5 | 850 | 55 |
| Comparative example 14 | 26 | 20 | 25.0 | 1150 | 46 |
| Example 12 | 26 | 22 | 26.0 | 1100 | 48 |
| Comparative example 15 | 30 | 30 | 30.0 | 450 | 60 |
| Comparative example 16 | 40 | 15 | 26.0 | 300 | 55 |

### (Examples 13 to 16 and Comparative Examples 17 to 19)

Next, in Examples 13 to 16 and Comparative Examples 17 to 19, a tungsten powder surface-treated in the same manner as in (Comparison of Flame Retardant), a polyester elastomer, and a mixture of silica and a polysiloxane compound, melamine cyanurate at ratios shown in Table 6, and condensed phosphate ester as a plasticizer at 5% in weight of relative to 100% in weight of the polyester elastomer were weighed and mixed so that the obtained resin composition had its specific gravity of 8.0. In the same manner as in (Comparison of Flame Retardant), a resin composition having its specific gravity of 8.0 was prepared. From the resin composition, a resin sheet as a test piece was formed. Bending tests and measurements of the oxygen index of the resin compositions were preformed in the same manner as in (Comparison of Flame Retardant). The mixture of silica and a polysiloxane compound and melamine cyanurate are compounded at the addition amounts shown in Table 6. The addition amounts shown in Table 6 are compound percentages relative to 100% in weight of the polyester elastomer. For the plasticizer added in Examples 13 to 16 and Comparative Examples 17 to 19, condensed phosphate ester was used, which was compounded at 5% in weight relative to 100% in weight of the polyester elastomer. The following Table 6 shows the results of the tests.

**[Table6]**

| | Melamine cyanurate (% in weight) | Total of silica and polysiloxane compound (% in weight) | Oxygen index | The number of times of bending | Total of melamine cyanurate, silica, and polysiloxane compound (% in weight) |
|---|---|---|---|---|---|
| Comparative example 17 | 9 | 28 | 25.0 | 2600 | 37 |
| Comparative example 18 | 12 | 28 | 25.5 | 1750 | 40 |
| Example 13 | 17 | 28 | 26.5 | 1950 | 45 |
| Example 14 | 20 | 29 | 28.0 | 1750 | 49 |
| Example 15 | 21 | 28 | 27.5 | 2000 | 49 |
| Example 16 | 24 | 29 | 27.5 | 1000 | 53 |
| Comparative example 19 | 60 | 10 | 28.0 | 280 | 70 |

The following facts are found from Tables 2 to 6. In the case of resins in which the total content of silica and the polysiloxane compound is 22% or more in weight, the content of melamine cyanurate is 17% or more in weight, and the total amount of silica, the polysiloxane compound, and melamine cyanurate is 45% to 53% in weight, relative to 100% in weight of the polyester elastomer, the number of times of bending in the bending test is 1000 or more and the oxygen index is 26.0 or more. Thus, the resin composition is high in bending strength and flame retardance though no halogen flame retardant is added. Contrastingly, in the case of resin compositions in which the total content of silica and the polysiloxane compound is less than 22% in weight, both the oxygen index and the bending strength are low. In the case of resin compositions in which the content of melamine cyanurate is less than 17% in weight, the oxygen index is low. In the case of resin compositions in which the total amount of silica, the polysiloxane compound, and melamine cyanurate is less than 45% in weight, the oxygen index is low. In the case of resin compositions in which the total amount of silica, the polysiloxane compound, and melamine cyanurate is more than 53% in weight, the bending strength is low.

(Addition Amount of Plasticizer: Examples 10 and 17 to 20)
Next, tungsten surface-treated in the same manner as in (Comparison of Flame Retardant), a polyester elastomer, a mixture of silica and a polysiloxane compound, and melamine cyanurate, and condensed phosphate ester as a plasticizer at ratios shown in Table 7 were weighed and mixed so that the obtained resin composition had its specific gravity of 8.0. In the same manner as in (Comparison of Flame Retardant), a resin composition having its specific gravity of 8.0 was prepared. From the resin composition, a resin sheet as a test piece was formed. Bending tests and measurements of the oxygen index of the resin composition were preformed in the same manner as in (Comparison of Flame Retardant). The mixture of silica and a polysiloxane compound and melamine cyanurate are respectively compounded at 27% in weight and 20% in weight relative to 100% in weight of the polyester elastomer. Condensed phosphate ester was compounded at the ratios shown in Table 7. The ratios shown in Table 7 are compound percentages relative to 100% in weight of the polyester elastomer. The following Table 7 shows the results of the tests.

**[Table 7]**

| | Addition amount (% in weight) | Oxygen index | The number of times of bending | Bleeding-out |
|---|---|---|---|---|
| Example 10 | 0 | 27.0 | 1300 | Not appeared |
| Example 17 | 5 | 27.0 | 1450 | Not appeared |
| Example 18 | 15 | 26.5 | 1650 | Not appeared |
| Example 19 | 20 | 27.0 | 1900 | Not appeared |
| Example 20 | 25 | 27.5 | 2600 | Appeared |

The following facts are found from Table 7. In the case of resin compositions in which condensed phosphate ester was added at 5% to 20% in weight relative to 100% in weight of the polyester elastomer, the bending strength is improved and no bleeding-out occurs. Contrastingly, when the content of condensed phosphate ester exceeds 20% in weight, bleeding-out occurs.

### (Form of Sheet: Examples 17 and 21)

Next, tungsten surface-treated in the same manner as in (Comparison of Flame Retardant), a polyester elastomer as a resin, a mixture of silica and a polysiloxane compound at 27% in weight relative to 100% in weight of the resin, melamine cyanurate at 20% in weight relative to 100% in weight of the resin, and condensed phosphate ester as a plasticizer at 5% in weight relative to 100% in weight of the resin were weighed and mixed so that the obtained resin composition had its specific gravity of 8.0. In the same manner as in (Comparison of Flame Retardant), a resin composition having its specific gravity of 8.0 was prepared. The resin composition was formed into resin sheets as shown in Table 8 by the following method. The sheet of Example 17 was formed in the same manner as in (Comparison of Flame Retardant). The sheet of Example 21 was formed as follows. The resin composition was rolled with two calender rolls heated to 90 degrees Celsius to form a 1.13 mm-thick sheet. Two of such 1.13 mm-thick sheets were put in layers and bonded to each other with a double-stick tape containing no halogen element. Bending tests and measurements of the oxygen index of the resin composition were performed in the same manner as in (Comparison of Flame Retardant). The following Table 8 shows the results of the tests.

**[Table 8]**

| | Form of sheet | The number of times of bending |
|---|---|---|
| Example 17 | Single 2.25 mm-thick resin sheet | 1450 |
| Example 21 | Resin sheet formed by putting two 1.13 mm-thick sheets in layers | 4600 |

From Table 8, it is found that the resin sheet in which two 1.13 mm-thick sheets are put in layers is larger in the number of times of bending than the single sheet having its thickness equal to the thickness of the resin sheet in which two 1.13 mm-thick sheets are put in layers and thus the former is superior in bending strength to the latter.

The preferred embodiments and examples of the present invention have been described above. However, the present invention is never limited to the above-described embodiments and examples. Various changes can be made within the scope of claims. For example, the resin sheets 10 and 20 using the resin composition of the above-described embodiments are used in a nuclear plant. However, the present invention is never limited to be used in a nuclear power plant. The present invention can be used for various application. For example, they may be also used in facilities in which radiation must be dealt with, other than such nuclear plants, for medical purposes, food inspection, research, and so on.

In the resin sheet 20 of the above-described embodiment, sheets 21 and 22 having the same resin composition may be put in layers, or sheets 21 and 22 different in resin composition may be put in layers. By changing the resin compositions of the sheets 21 and 22, the radiation shielding performance, the flame retardance, and the strength can be changed.

In the resin sheet 20 of the above-described embodiment, a thin metallic sheet or net or some metal rods may be interposed between the sheets 21 and 22. Thereby, the shape of the resin sheet 20 can be kept and the resin sheet 20 can be prevented from bending or breaking.

## Claims

1. A resin composition comprising a tungsten powder, a polyester elastomer, silica, a polysiloxane compound, melamine cyanurate, and substantially no halogen element,
the total content of silica and the polysiloxane compound being not less than 22% in weight relative to 100% in weight of the polyester elastomer, the content of melamine cyanurate being not less than 17% in weight relative to 100% in weight of the polyester elastomer, the total content of silica, the polysiloxane compound, and melamine cyanurate being 45% to 53% in weight relative to 100% in weight of the polyester elastomer.

2. A resin composition comprising a tungsten powder, a polyester elastomer, silica, a polysiloxane compound, melamine cyanurate, and substantially no halogen element,
the oxygen index of the resin composition being not less than 26 measured by a burning test according to JIS K 7201, using a test piece having its width of 10 mm, its length of 100 mm and its thickness of 2.25 mm, burning tests being performed at intervals of 0.5% of the oxygen index to define the oxygen index by the maximum oxygen concentration at which self-extinguishing occurred,
the number of times of bending a test piece at 90 degrees circumferentially of a 10 mm-diameter column being not less than 1000 in a repetitive bending test using the test piece made of the resin composition having its length of 50 mm, its width of 100 mm, and its thickness of 2.25 mm.

3. The resin composition according to claim 1, further comprising 5% to 20% in weight of a plasticizer relative to 100% in weight of the polyester elastomer.

4. A resin sheet comprising a sheet made of the resin composition according to any of claims 1 to 3.

5. The resin sheet according to claim 4, wherein the resin sheet is formed by putting in layers two sheets made of the resin composition according to any of claims 1 to 3.

## Patentansprüche

1. Harzzusammensetzung, umfassend ein Wolframpulver, ein Polyesterelastomer, Silica, eine Polysiloxanverbindung, Melamincyanurat und im Wesentlichen kein Halogenelement,
wobei der Gesamtgehalt an Silica und Polysiloxanverbindung nicht weniger als 22 Gew.-% bezüglich 100 Gew.-% des Polyesterelastomers ist, der Melamincyanurat-Gehalt nicht weniger als 17 Gew.-% bezüglich 100 Gew.-% des Polyesterelastomers ist und der Gesamtgehalt an Silica, Polysiloxanverbindung und Melamincyanurat 45 - 53 Gew.-% bezüglich 100 Gew.-% des Polyesterelastomers ist.

2. Harzzusammensetzung, umfassend ein Wolframpulver, ein Polyesterelastomer, Silica, eine Polysiloxanverbindung, Melamincyanurat und im Wesentlichen kein Halogenelement,
wobei der Sauerstoffindex der Harzzusammensetzung nicht weniger als 26, gemessen durch einen Verbrennungstest gemäß JIS K 7201 unter Verwendung eines Teststückes mit 10 mm in seiner Breite, 100 mm in seiner Länge und 2,25 mm in seiner Dicke ist, wobei Verbrennungstests bei Intervallen von 0,5 % Sauerstoffindex ausgeführt werden, um den Sauerstoffindex durch die maximale Sauerstoffkonzentration zu definieren, bei welcher Selbstlöschung auftritt,
wobei die Häufigkeit von Verbiegen eines Teststücks um einen 90°-Winkel von einer 10 mm-Durchmesser Säule nicht weniger als 1.000 in einem wiederholten Biegetest unter Verwendung eines Teststücks ist, das eine Länge von 50 mm, eine Breite von 100 mm und eine Dicke von 2,25 mm besitzt und aus der Harzzusammensetzung gemacht ist.

3. Harzzusammensetzung nach Anspruch 1, ferner 5 - 20 Gew.-% Weichmacher bezüglich 100 Gew.-% des Polyesterelastomers umfassend.

4. Harzblatt, umfassend ein Blatt, das aus der Harzzusammensetzung aus einem der Ansprüche 1 bis 3 gemacht ist.

5. Harzblatt nach Anspruch 4, wobei das Harzblatt durch Schichtung von zwei Blättern ausgebildet ist, die aus der Harzzusammensetzung mach einem der Ansprüche 1 bis 3 gemacht sind.

## Revendications

1. Composition de résine comprenant une poudre de tungstène, un élastomère de polyester, de la silice, un composé de polysiloxane, du cyanurate de mélamine, et pratiquement aucun élément d'halogène,
la teneur totale en silice et en le composé de polysiloxane n'étant pas inférieure à 22 % en masse par rapport à 100 % en masse de l'élastomère de polyester, la teneur en cyanurate de mélamine n'étant pas inférieure à 17 % en masse par rapport à 100 % en masse de l'élastomère de polyester, la teneur totale en silice, en le composé de polysiloxane et en le cyanurate de mélamine étant de 45 % à 53 % en masse par rapport à 100 % en masse de l'élastomère de polyester.

2. Composition de résine comprenant une poudre de tungstène, un élastomère de polyester, de la silice, un composé de polysiloxane, du cyanurate de mélamine, et pratiquement aucun élément d'halogène,
l'indice oxygène de la composition de résine n'étant pas inférieur à 26 mesuré par un test de combustion selon JIS K 7201, utilisant une pièce de test présentant sa largeur de 10 mm, sa longueur de 100 mm et son épaisseur de 2,25 mm, les tests de combustion étant réalisés à des intervalles de 0,5 % de l'indice d'oxygène pour définir l'indice d'oxygène par la concentration maximale en oxygène à laquelle une auto-extinction a lieu,
le nombre de flexions d'une pièce de test à 90° circonférentiellement d'une colonne de diamètre 10 mm n'étant pas inférieur à 1 000 dans un test de flexion répétitif utilisant la pièce de test constituée de la composition de résine présentant sa longueur de 50 mm, sa largeur de 100 mm et son épaisseur de 2,25 mm.

3. Composition de résine selon la revendication 1, comprenant de plus de 5 % à 20 % en masse d'un plastifiant par rapport à 100 % en masse de l'élastomère de polyester.

4. Feuille de comprenant une feuille constituée de la composition de résine selon l'une quelconque des revendications 1 à 3.

5. Feuille de résine selon la revendication 4, dans laquelle la feuille de résine est formée en mettant en couches deux feuilles constituées de la composition de résine selon l'une quelconque des revendications 1 à 3.
